# EUROPÄISCHE PATENTSCHRIFT

(11) **EP 2 665 195 B1**
(45) Veröffentlichungstag und Bekanntmachung des Hinweises auf die Patenterteilung: **28.10.2015**
(21) Anmeldenummer: 13180711.7
(22) Anmeldetag: 14.04.2011
(51) Int. Cl.: H04B 3/28, H04B 3/30, H04L 25/02

(54) **Vorrichtung zur Bereitstellung einer eigensicheren Versorgungsspannung und zur Übertragung von Kommunikationssignalen**
Device for providing an intrinsically safe supply voltage and for transmitting communication signals
Dispositif destiné à mettre à disposition une tension d'alimentation à sécurité intrinsèque et à transmettre des signaux de communication

(30) Priorität: 21.05.2010 DE 102010029234
(43) Veröffentlichungstag der Anmeldung: 20.11.2013
(62) Teilanmeldung aus: 11715909.5
(73) Patentinhaber: Endress + Hauser Flowtec AG, 4153 Reinach/BL (CH)
(72) Erfinder: Fink, Nikolai, 4147 Aesch (CH); Brudermann, Matthias, 4313 Moehlin (CH)
(74) Vertreter: Andres, Angelika Maria

(56) Entgegenhaltungen:
- DE-A1-102007 036 964
- Anonymous: "C-37P Variable-directivity condenser microphone", SONY , 19. März 2008 (2008-03-19), Seiten 1-9, XP002640370, Gefunden im Internet: URL:http://www.coutant.org/sonyscan/c-37p. pdf [gefunden am 2011-06-07]

## Beschreibung

Die Erfindung bezieht sich auf eine Vorrichtung zur Bereitstellung einer eigensicheren Versorgungsspannung und zur Übertragung von Kommunikationssignalen zwischen wenigstens zwei Teilnehmern eines Kommunikationsnetzwerks.

In der Prozessautomatisierungstechnik werden Geräte, insb. Messgeräte, oftmals an Orten eingesetzt, an denen die Gefahr einer Explosion besteht. An Geräte, die in explosionsgefährdeten Bereichen eingesetzt sind, werden besondere Sicherheitsanforderungen gestellt. Diese Sicherheitsanforderungen haben das Ziel eine Funkenbildung, die ggf. eine Explosion auslösen könnte, zu vermeiden.

So ist gemäß der Europäischen Norm EN 50 020 Explosionsschutz gegeben, wenn Geräte gemäß der darin definierten Schutzklasse Eigensicherheit (Exi) ausgebildet sind. Gemäß dieser Schutzklasse haben die Werte für die elektrischen Größen Strom, Spannung und Leistung in einem Gerät zu jeder Zeit jeweils unterhalb eines vorgegebenen Grenzwertes zu liegen. Die drei Grenzwerte sind so gewählt, dass im Fehlerfall, die maximal zur Verfügung stehende Energie nicht ausreicht, um einen Zündfunken zu erzeugen. Der Strom wird z.B. durch Widerstände, die Spannung z.B. durch Zener-Dioden und die Leistung durch entsprechende Kombinationen von strom- und spannungsbegrenzenden Bauteilen unter den vorgegebenen Grenzwerten gehalten. In der vorgenannten Europäischen Norm werden weitere bekannte Schutzklassen, d.h. Ex-e, Ex-d etc., beschrieben. Ein anderes Beispiel des Standes der Technik ist unter XP002640370 zu finden.

Weiterhin ist aus der Offenlegungsschrift DE 4344071 A1 ein Übertragungssystem für explosionsgefährdete Bereiche bekannt geworden, bei dem das Bussystem eigensicher und explosionsgeschützt ausgeführt ist. Auch aus der EP 0666631 A2 ist ein Speisesystem für einen Feldbus in explosionsgefährdeten verfahrenstechnischen Anlagen bekannt geworden, bei dem Energie und Daten über dasselbe Adernpaar übertragen werden. Dabei ist eines der Begrenzungsmittel in einem Verteiler unmittelbar vor den Anschlüssen für die Verbraucher angeordnet.

Die bekannten Mittel um ein Kommunikationsnetzwerk bzw. dessen Teilnehmer eigensicher auszulegen, sind aber umfangreich und benötigen ausser den Kommunikationsleitungen weitere Leitungen zur Energieversorgung oder zusätzliche Schaltungen zur Begrenzung der maximal übertragbaren Leistung

Der Erfindung liegt daher die Aufgabe zugrunde, eine einfachere eigensichere Spannungsversorgung eines Teilnehmers eines Kommunikationsnetzwerks vorzuschlagen.

Die Aufgabe wird erfindungsgemäß durch den unabhängigen Anspruch 1 gelöst. Vorteilhafte Ausgestaltungen sind in den Unteransprüchen angegeben.

Gemäß dem unabhängigen Anspruch 1 wird die Aufgabe durch eine Vorrichtung zur Bereitstellung einer eigensicheren Versorgungsspannung und zur Übertragung von Kommunikationssignalen zwischen wenigstens zwei Teilnehmern eines Kommunikationsnetzwerks gelöst, wobei der erste Teilnehmer über eine erste Betriebselektronik und der zweite Teilnehmer über eine zweite Betriebselektronik verfügen, wobei der erste und der zweite Teilnehmer über genau ein Paar von Signaladern miteinander verbunden sind, und wobei der erste Teilnehmer über ein erstes induktives Koppelelement verfügt, welches zur galvanischen Trennung zwischen der ersten Betriebselektronik und dem Paar von Signaladern dient, und welches erste induktive Koppelelement einerseits mit dem Paar von Signaladern und andererseits mit der ersten Betriebselektronik verbunden ist, wobei das erste induktive Koppelelement weiterhin zum Übertragen von Kommunikationssignalen über das Paar von Signaladern an den bzw. von dem zweiten Teilnehmer dient, wobei der zweite Teilnehmer über ein zweites induktives Koppelelement verfügt, welches zur galvanischen Trennung zwischen der zweiten Betriebselektronik und dem Paar von Signaladern dient, und welches zweite induktive Koppelelement einerseits mit dem Paar von Signaladern und andererseits mit der zweiten Betriebselektronik verbunden ist, wobei das zweite induktive Koppelelement weiterhin zum Übertragen von Kommunikationssignalen über das Paar von Signaladern an den bzw. von dem ersten Teilnehmer dient,
wobei eine Spannungsquelle vorgesehen ist, die zur Einspeisung einer Spannung dient, und welche Spannungsquelle einerseits an einen Mittelabgriff auf der Seite des ersten Koppelelements, welche mit dem Paar von Signaladern verbunden ist und andererseits an ein Massepotential angeschlossen ist, wobei ein Mittelabgriff auf der Seite des zweiten Koppelelements, welche mit dem Paar von Signaladern verbunden ist und ein Abgriff von dem Massepotential zur Bereitstellung einer Versorgungsspannung für die zweite Betriebselektronik dienen, wobei die von der Spannungsquelle eingespeiste Spannung und/oder die abgegriffene Versorgungsspannung derart begrenzt ist, dass sie den Anforderungen an die Eigensicherheit genügt.

Es ist eine Idee der Erfindung eine Verbindung zwischen zwei Teilnehmern herzustellen, die miteinander über ein Kommunikationsnetzwerk kommunizieren, und bei der der erste Teilnehmer den zweiten Teilnehmer mit Energie versorgt. Das Übertragen der Kommunikationssignale und der Versorgungsspannung erfolgt dabei über ein und dasselbe Paar von Signaladern, über welches die beiden Teilnehmer miteinander verbunden sind. Zum Übertragen der Kommunikationssignale können die Kommunikationssignale von dem ersten Teilnehmer über das erste Koppelelement gesendet oder von dem ersten Teilnehmer über das erste Koppellement empfangen werden. Gleiches gilt entsprechend für das zweite Koppelelement des zweiten Teilnehmers. Kommunikationssignale und Versorgungsspannung werden dann gegenüber dem Massepotential abgegriffen. Bei dem Massepotential kann es sich bspw. um das Erdpotential oder ein anderes Referenzpotential handeln, das beiden Teilnehmern insbesondere an ihrem jeweiligen Standort innerhalb einer industriellen Anlage zur Verfügung steht. Das Massepotential kann bspw. auch über eine zusätzliche elektrische Leitung zwischen dem ersten und dem zweiten Teilnehmer übertragen werden.

Außerdem kann der erste Teilnehmer über eine Spannungsquelle, d.h. eine Quelle elektrischer Energie, verfügen, die zur Versorgung des zweiten Teilnehmers mit der Versorgungsspannung dient. Natürlich kann der erste Teilnehmer bzw. dessen Betriebselektronik selbst auch vermittels der Spannungsquelle betrieben werden. Zumindest aber kann der erste Teilnehmer Anschlüsse aufweisen, über die der erste Teilnehmer mit der Spannungsquelle verbindbar ist. Der zweite Teilnehmer kann dann als Verbraucher fungieren, der diese Versorgungsspannung bspw. zum Aufrechterhalten seiner Funktion und/oder Funktionalität, bspw. einen Messwert zu ermitteln, nutzt. Soll die vorgeschlagene Vorrichtung in einem explosionsgefährdeten Bereich eingesetzt werden, kann die Spannungsquelle einer Idee der Erfindung folgend nach den entsprechenden Ex-i-Vorschriften, d.h. strom- und spannungsbegrenzt ausgeführt werden, d.h. die maximal von der Spannungsquelle zur Verfügung gestellte elektrische Leistung liegt unterhalb einem entsprechend dem Ex-i-Standard vorgegebenen Grenzwert. Alternativ kann zwischen der Spannungsquelle und den entsprechenden Anschlüssen des ersten Teilnehmers eine Schaltung zur Strom-, Spannungs und/oder Leistungsbegrenzung vorgesehen sein.

Zudem kann wenigstens eines der induktiven Koppelelemente insbesondere sowohl das erste als auch das zweite induktive Koppelelement entsprechend den Ex-i-Vorschriften, insbesondere entsprechend den in dem Ex-i-Standard festgelegten Abstands- und Isolationsanforderungen, ausgelegt werden. Werden die beiden Koppelelemente, die Signaladern und ggf. die zusätzliche Leitung zur Übertragung des Massepotentials derart ausgelegt, kann dadurch die Verbindung zwischen den beiden Teilnehmern und/oder die gesamte Vorrichtung in einem explosionsgefährdeten Bereich und gemäß der Schutzart Ex-i ausgelegt werden.

Alternativ kann auch nur eines der Koppelelemente gemäß den Ex-i Anforderungen ausgelegt werden, damit der jeweilige Teilnehmer gemäß den Ex-i Anforderungen ausgelegt ist. Wird z.B. die Betriebselektronik des ersten Teilnehmers entsprechend den Vorschriften bzgl. der Eigensicherheit Ex-i ausgelegt und ist auch das erste Koppelelement gemäß diesen Vorschriften ausgelegt, so ist der erste Teilnehmer entsprechend den Anforderungen an die Eigensicherheit ausgelegt. Sind die Signaladern dann auch entsprechend den Anforderungen an die Eigensicherheit ausgelegt bspw. isoliert, und ist das zweite Koppelelement auch entsprechend den Anforderungen an die Eigensicherheit ausgelegt, so ist der erste Teilnehmer samt den zugehörigen Verbindungsleitungen, d.h. den zugehörigen isolierten Signaladern, entsprechend den Anforderungen an die Eigensicherheit ausgelegt. Die Verbindungsstrecke zwischen dem ersten und dem zweiten Teilnehmer ist dann Eigensicher ausgelegt. Dies kann in einer industriellen Prozessanlage von fundamentaler Bedeutung sein, um z.B. zu gewährleisten, dass kein Zündfunke auf der Übertragungsstrecke der Kommunikationssignale entsteht.

Das Gleiche gilt dann bei entsprechenden Vorkehrungen für den zweiten Teilnehmer. Wird also z.B. die Betriebselektronik des zweiten Teilnehmers entsprechend den Vorschriften bzgl. der Eigensicherheit Ex-i ausgelegt und ist auch das zweite Koppelelement gemäß diesen Vorschriften ausgelegt, so ist der zweite Teilnehmer entsprechend den Anforderungen an die Eigensicherheit ausgelegt. Sind die Signaladern, wie erwähnt, dann auch entsprechend den Anforderungen an die Eigensicherheit ausgelegt bspw. isoliert, und ist das erste Koppelelement auch entsprechend den Anforderungen an die Eigensicherheit ausgelegt, so ist der zweite Teilnehmer samt den zugehörigen Verbindungsleitungen, d.h. den zugehörigen isolierten Signaladern, entsprechend den Anforderungen an die Eigensicherheit ausgelegt.

Ist nun die Betriebselektronik des ersten und des zweiten Teilnehmers sowie die Signaladern und ggf. die zusätzliche Leitung zur Übertragung des Massepotentials entsprechend den Anforderungen an die Eigensicherheit ausgelegt, so ist die gesamte Vorrichtung entsprechend den Anforderungen an die Eigensicherheit Ex-i ausgelegt.

Andererseits ist es auch möglich lediglich das erste und das zweite Koppelelement sowie die Signaladern gemäß den Anforderungen an die Eigensicherheit Ex-i auszulegen, während z.B. die Betriebselektronik des ersten und des zweiten Teilnehmers nicht entsprechend diesen Anforderungen ausgelegt sind. Dann ist zumindest die Verbindung bzw. die Verbindungsstrecke zwischen dem ersten und den zweiten Teilnehmer Eigensicher ausgelegt.

Bei dem ersten und dem zweiten Teilnehmer kann es sich bspw. um einen ersten Geräteteil und einen zweiten Geräteteil bspw. eines Feldgerätes insbesondere Messgerätes handeln. Bspw. kann es sich um ein Messgerät, bei dem bspw. Messverstärker und Transmitter separat ausgeführt sind, oder aber auch um verschiedene Geräte, insbesondere Messgeräte, handeln. Ein Messgerät bei dem Transmitter und Messverstärker voneinander abgesetzt sind, verfügt bspw. über einen ersten Geräteteil und einen zweiten Geräteteil, wobei der erste Geräteteil über die Spannungsquelle verfügt und über diese Spannungsquelle den zweiten Geräteteil, der als Verbraucher fungiert, mit einer Versorgungsspannung versorgt. Bei dem ersten Geräteteil kann es sich bspw. um den Transmitter und bei dem zweiten Geräteteil um den Messverstärker handeln. Andererseits kann es sich bei dem ersten Geräteteil um den Messverstärker und bei dem zweiten Geräteteil um den Transmitter handeln. Der erste und der zweite Geräteteil bzw. Messverstärker und Transmitter können dazu in unterschiedlichen Gehäusen untergebracht sein und bspw. über das Paar von Signaladern und evt. über die zusätzliche elektrische Leitung zur Übertragung des Massepotentials miteinander verbunden sein.

Zusammen mit den weiter oben vorgeschlagenen Ausgestaltungen besteht dann die Möglichkeit, bspw. das Gehäuse des ersten und/oder des zweiten Teilnehmers z.B. gemäß den Anforderungen an die Schutzart Ex-d, d.h. druckfest, auszugestalten, während die erste und/oder die zweite Betriebselektronik nicht gemäß der Schutzart Eigensicher Ex-i ausgelegt sind, jedoch das erste und das zweite Koppelelement sowie die Signaladern und ggf. die zusätzliche Leitung zur Übertragung des Massepotentials entsprechend der Schutzart Eigensicher Ex-i ausgelegt sind.

Ein Bestandteil der vorgeschlagenen Vorrichtung sind das erste und das zweite induktive Koppelelement. Das erste induktive Koppelelement, dient zur galvanischen Trennung zwischen der Betriebselektronik des ersten Teilnehmers, d.h. der ersten Betriebselektronik, und dem Paar von Signaladern. Das zweite induktive Koppelelement dient zur galvanischen Trennung der Betriebselektronik des zweiten Teilnehmers, d.h. der zweiten Betriebselektronik, und dem Paar von Signaladern. Um zusammen mit den Kommunikationssignalen eine Versorgungsspannung über die Signaladern zu übertragen, bzw. die Versorgungspannung von dem Paar von Signaladern abzugreifen, besitzen das erste und das zweite induktive Koppelelement einen Mittelabgriff. Der Mittelabgriff ist dabei auf der Seite der induktiven Koppelelemente angeordnet, die mit dem Paar von Signaladern verbunden sind. Die Koppelelemente können dabei so ausgestaltet sein, dass eine Signalübertragung in beide Richtungen, d.h. zwischen Primär- und Sekundärseite der induktiven Koppelelemente, möglich ist. Über den Mittelabgriff des ersten Koppelelements, welcher Mittelabgriff bspw. an eine Spannungsquelle angeschlossen ist, kann also das elektrische Potential des Paars von Signaladern verändert werden, so dass gegenüber einem Masse- oder Referenzpotential eine Versorgungsspannung abgegriffen werden kann. Bei der Spannungsquelle handelt es sich bevorzugt um eine Gleichspanungsquelle. Dann ist der Mittelabgriff des ersten Koppelelements bspw. mit einem Pol der Spannungsquelle verbunden, während der andere Pol an das Massepotential angeschlossen und bspw. geerdet wird. Bei dem ersten und/oder zweiten Koppelelement kann es sich um einen Übertrager oder um einen Transformator handeln.

Bei dem Kommunikationsnetzwerk handelt es sich bevorzugt um ein Bussystem. Bei dem Bussystem wiederum handelt es sich besonders bevorzugt um ein gemäß dem RS-485-Standard ausgelegtes Bussystem. Dadurch kann die Energieversorgung des zweiten Teilnehmers über das gemäß dem RS-485-Standard funktionierende Kommunikationsnetzwerk erfolgen. Bei solchen Anordnungen sind z.B. der erste und zweite Teilnehmer bzw. der erste und der zweite Geräteteil über ein geräte-internes Bussystem miteinander verbunden. Das Bussystem beruht dabei bspw. auf dem RS485-Standard und die über das Bussystem übertragenen Kommunikationssignale können bspw. manchester-codiert, d.h. u.a. mittelwertfrei, sein. Der erste und der zweite Geräteteil bspw. Messverstärker und Transmitter können aber natürlich auch in einem einzigen Gehäuse angeordnet und dennoch über ein Bussystem miteinander verbunden sein. Es kann, wie bereits erwähnt, erforderlich sein, zusätzlich zu den Signaladern des Kommunikationsnetzwerks eine zusätzliche elektrische Leitung vorzusehen, die zur Übertragung des Referenzpotentials zwischen dem ersten und dem zweiten Teilnehmer dient. Der RS-485-Standard kann bspw. in Form eines Zweidraht-, Half-Duplex-, Multi-Drop-Kommunikationsnetzwerkes, bei dem mehrere Teilnehmer, insbesondere aber mindestens der erste und der zweite Teilnehmer, miteinander verbunden sind, umgesetzt werden. Über die beiden Signaladern, d.h. das Paar von Signaladern, der Zweidrahtleitung wird dann gemäß dem RS-485-Standard ein volldifferentielles Kommunikationssignal übertragen. Weiterhin kann es vorteilhaft sein, dass die Teilnehmer des Kommunikationsnetzwerkes oder zumindest der erste und der zweite Teilnehmer ein gemeinsames Massepotential (be-)nutzen.

Zur Identifikation eines Teilnehmers in einem RS-485-Kommunikationsnetzwerk ist jeder Teilnehmer mit einer Adresse versehen. Über seine spezifische Adresse kann dann jeder Teilnehmer in dem Kommunikationsnetzwerk angesprochen werden. Die Kommunikationssignale werden bspw. von der Betriebselektronik des ersten Teilnehmers über das erste induktive Koppelelement in das Paar von Signaladern eingekoppelt und durch das zweite induktive Koppelelement aus den Signaladern ausgekoppelt und an die Betriebselektronik des zweiten Teilnehmers übertragen. Natürlich ist auch die umgekehrte Übertragungsrichtung, d.h. vom zweiten zum ersten Teilnehmer, möglich.

Durch die vorliegende Erfindung kann also sowohl eine Kommunikation als auch die Übertragung einer Versorgungsspannung in eigensicherer Art und Weise zumindest über ein gemeinsames Paar von Signaladern erfolgen. Weiterhin kann es, wie bereits erwähnt, vorgesehen sein, eine elektrische Leitung zur Übertragung des Massepotentials zwischen dem ersten und dem zweiten Teilnehmer zu verwenden. So kann bspw. die Potentialdifferenz zwischen dem Massepotential und dem von der Spannungsquelle über den Mittelabgriff in dem Paar von Signaladern erzeugten elektrischen Potential als Versorgungsspannung für den zweiten Teilnehmer, insbesondere für dessen Betriebelektronik, verwendet werden. Es können entsprechend einer Ausgestaltung der vorgeschlagenen Vorrichtung dann sowohl eine Versorgungsspannung als auch Kommunikationssignale über eine gemäß dem RS-485-Standard arbeitende Kommunikationsschnittstelle übertragen werden.

In einer Ausgestaltung der Vorrichtung gemäß dem unabhängigen Anspruch 1 dient das Paar von Signaladern zum Übertragen der Kommunikationssignale in einem Halbduplex-Betrieb zwischen den beiden Teilnehmern. D.h. der erste und der zweite Teilnehmer übertragen abwechselnd Kommunikationssignale über das Paar von Signaladern.

In einer weiteren Ausgestaltung der Vorrichtung gemäß dem unabhängigen Anspruch 1 erfolgt die Übertragung des Massepotentials über eine zusätzliche elektrische Leitung, bspw. in Form eines Kabels, zwischen dem ersten Teilnehmer und dem zweiten Teilnehmer. Bei dieser zusätzlichen Leitung kann es sich um einen elektrischen Leiter handeln, über den ein gemeinsames Massepotential für den ersten und den zweiten Teilnehmer zugänglich ist. Dadurch kann sichergestellt werden, dass die Kommunikationssignale sowohl durch den ersten als auch durch den zweiten Teilnehmer gegenüber demselben Massepotential ausgewertet werden und eine im Wesentlichen konstante Versorgungsspannung bereitgestellt werden kann. Das Massepotential kann zwischen dem ersten und dem zweiten Teilnehmer bspw. über Kabel, Gehäuse oder Erdleiter geschehen.

In einer weiteren Ausgestaltung der Vorrichtung gemäß dem unabhängigen Anspruch 1 überlagern sich die eingespeiste Spannung und die Kommunikationssignale in dem einen Paar von Signaladern.

In einer weiteren Ausgestaltung der Vorrichtung gemäß dem unabhängigen Anspruch 1 handelt es sich bei den Kommunikationssignalen um zueinander inverse elektrische Signale, die jeweils im Wesentlichen parallel zueinander auf dem einen Paar von Signaladern übertragen werden. Durch die induktiven Koppelelemente werden die Kommunikationssignale auf das im Wesentlichen parallel verlaufende Paar von Signaladern eingekoppelt, wo sie bspw. als zueinander differentielle Signale an das zweite induktive Koppelelement übertragen werden. Am Mittelabgriff eines induktiven Koppelelements, bei dem es sich bevorzugt um eine Spule bzw. um ein Spulenpaar bspw. in Form eines Übertrager oder Transformators handelt, löschen sich diese differentiellen Signale aus, so dass die dort abgegriffen Spannung im Wesentlichen konstant ist. Diese Spannung kann dann als Versorgungspannung für den zweiten Teilnehmer bzw. für dessen Betriebselektronik dienen.

In einer weiteren Ausgestaltung der Vorrichtung gemäß dem unabhängigen Anspruch 1 erfolgt die Energieversorgung des zweiten Teilnehmers ausschließlich durch die abgegriffene Versorgungsspannung. Bestimmte Geräte, die als Teilnehmer des Kommunikationssystems fungieren, weisen u.U. einen geringen Leistungsbedarf auf oder entsprechen den Anforderungen an die Eigensicherheit Ex-i und können auch mit einer relativ geringen Versorgungspannung von ca. 15 V betrieben werden.

Die Erfindung wird anhand der nachfolgenden Zeichnungen näher erläutert. Es zeigt:
Fig. 1: eine schematische Darstellung einer Ausgestaltung der vorgeschlagenen Vorrichtung im Halbduplex-Betrieb,
Fig. 2: eine schematische Darstellung einer weiteren Ausgestaltung der vorgeschlagenen Vorrichtung im Vollduplex-Betrieb.

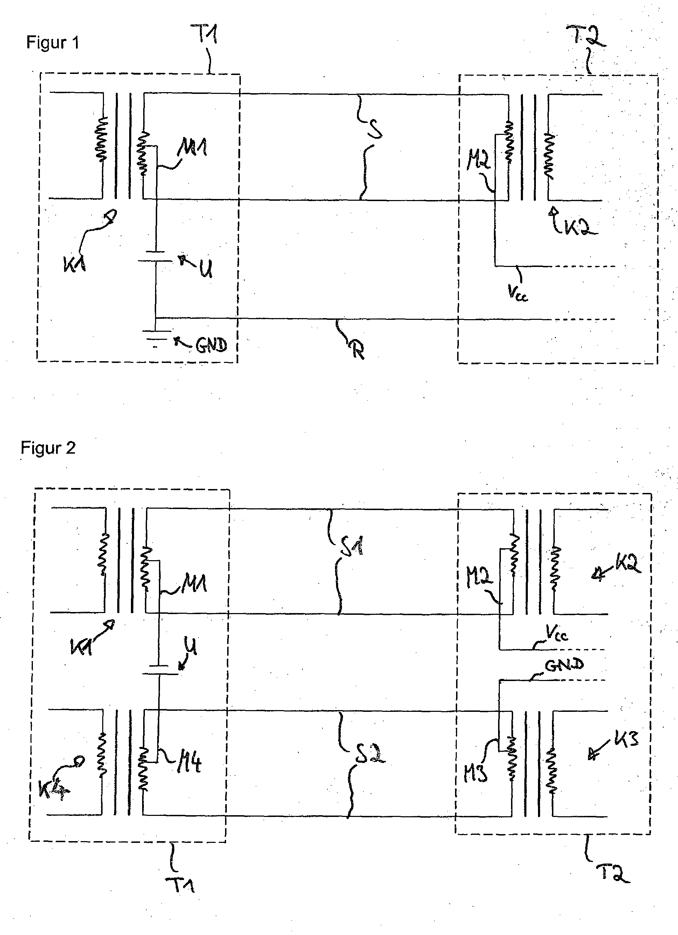

Figur 1 zeigt eine Vorrichtung zum eigensicheren Übertragen von Kommunikationssignalen und einer Versorgungsspannung zwischen einem ersten und einem zweiten Teilnehmer, hier zwei Geräteteilen T1, T2. Die Kommunikation findet dabei im sog. Halduplex-Betrieb statt. Dafür ist das erste Geräteteil T1 über ein Paar von Signaladern S mit dem zweiten Geräteteil T2 verbunden. Weiterhin weist das erste Geräteteil T1 eine Verbindung zu einer Spannungsquelle U auf.

Die beiden Geräteteile T1, T2 sind galvanisch voneinander und von der Spannungsquelle U über induktive Koppelelemente K1, K2 getrennt. Dabei ist die Betriebselektronik, nicht gezeigt, des ersten Geräteteils T1 über ein erstes induktives Koppelelement K1 von dem Signaladernpaar S getrennt. Das erste induktive Koppelelement K1 weist eine Primärseite und eine Sekundärseite auf und ist primärseitig mit der Betriebselektronik und sekundärseitig mit dem Signaladernpaar S verbunden. Weiterhin ist das erste induktive Koppelelement K1 sekundärseitig über einen Mittelabgriff M1 mit der Spannungsquelle U verbunden. Bei der Spannungsquelle U handelt es sich um eine Gleichspannungsquelle. Die Spannungsquelle U weist zwei unterschiedlich gepolte Anschlüsse auf, wobei der erste Anschluss mit dem Mittelabgriff des ersten induktiven Koppelelements K1 und der zweite Anschluss mit einem Massepotential GND verbunden ist. Über das Paar von Signaladern S ist das erste Geräteteil T1 mit einem induktiven Koppelelement K2 des zweiten Geräteteils T2 verbunden. Auf der mit dem Paar von Signaladern S verbundenen Seite des zweiten induktiven Koppelelements K2 ist ein weiterer Mittelabgriff M2 vorgesehen, der zum Abgreifen einer Versorgungsspannung dient. Das an dem Mittelabgriff anliegende Potential wird zu diesem Zweck gegenüber dem Massepotential GND abgegriffen und der Betriebselektronik, nicht gezeigt, des zweiten Geräteteils T2 zugeführt. Die zugeführte Versorgungsspannung ist dabei auf einen Wert unterhalb der durch die Schutzart Eigensicher liegenden Grenzwert beschränkt. Das erste und das zweite Induktive Koppelelement K1, K2 dienen dann bei der Übertragung der Kommunikationssignale wechselseitig als Sender und Empfänger.

Figur 2 zeigt eine schematische Darstellung einer vorgeschlagenen Vorrichtung für den Vollduplex-Betrieb. Dabei dient ein erstes Paar von Signaladern S1 über das ein erster und ein zweiter Geräteteil T1, T2 miteinander verbunden sind als erster Übertragungskanal und ein zweites Paar von Signaladern S2 über das der erste und der zweite Geräteteil T1, T2 miteinander verbunden sind als zweiter Übertragungskanal, so dass Kommunikationssignale im Voll-Duplex-Betrieb zwischen dem ersten und dem zweiten Teilnehmer T1, T2 übertragen werden können. Alternativ kann die in Figur 2 gezeigte Vorrichtung zur Übertragung von Signalen zwischen dem ersten und dem zweiten Geräteteil im redundanten Halb-Duplex-Betreib dienen. Dann wird über das erste und/oder über das zweite Paar von Signaladern für eine Übertragung von Kommunikationssignalen im Halb-Duplex-Betreib verwendet.

Der erste Geräteteil T1 verfügt über zwei induktive Koppelelemente K1, K4 die jeweils über einen Mittelabgriff M1, M4 verfügen, welcher dazu dient, eine Spannung an den zweiten Geräteteil T2 zu übertragen. Dazu ist der Mittelabgriff M1 des ersten induktiven Koppelelements K1, das bspw. als Sendeteil dient, mit einer Spannungsquelle U verbunden. Der erste Mittelabgriff M1 ist mit einem Anschluss der Spannungsquelle U mit einer ersten Polarität, und der Mittelabgriff M4 des als Empfänger dienenden zweiten induktiven Koppelelements K4 ist mit einem Anschluss entgegengesetzter Polarität verbunden. Dadurch werden die beiden Paare von Signaladern S1, S2 auf unterschiedliche Potentiale gebracht. Der zweite Geräteteil T2 der ebenfalls über zwei induktive Kopplungselemente K2, K3 verfügt, die jeweils über das erste bzw. das zweite Paar von Signaladern S1, S2 mit einem induktiven Koppelelement K1, K4 des ersten Geräteteils T1 verbunden sind, kann dann über diese durch die Potentialdifferenz zwischen den beiden Paaren von Signaladern S1, S2 mit einer Versorgungsspannung versorgt werden. Dafür weisen die beiden induktiven Koppelelemente K2, K3 des zweiten Geräteteils T2 jeweils einen Mittelabgriff M2, M3 auf, der mit dem ersten bzw. mit dem zweiten Paar von Signaladern S1, S2 verbunden Seite auf. Die über diese Mittelabgriffe M2, M3 der induktiven Koppelelemente K2, K3 des zweiten Geräteteils T2 abgegriffene Versorgungsspannung kann der Betriebselektronik des zweiten Teilnehmers T2 zugeführt werden. Die Spannungsquelle U ist gemäß der Schutzart Eigensicher, d.h. Ex-i, ausgelegt, so dass die maximal zur Verfügung stehende Leistung einen Grenzwert nicht überschreitet. Die beiden Geräteteile können daher auch in explosionsgefährdeten Bereichen bspw. einer industriellen Anlage eingesetzt werden.

### Bezugszeichenliste

- T1: erster Teilnehmer
- T2: zweiter Teilnehmer
- K1: erstes induktives Koppelelement
- K2: zweites induktives Koppelelement
- K3: drittes induktives Koppelelement
- K4: viertes induktives Koppelelement
- M1: erster Mittelabgriff
- M2: zweiter Mittelabgriff
- M3: dritter Mittelabgriff
- M4: vierter Mittelabgriff
- U: Gleichspannungsquelle
- S: Paar von Signaladern
- S1: erstes Paar von Signaladern
- S2: zweites Paar von Signaladern
- Vcc: Versorgungspannungspotential
- GND: Massepotential
- R: weitere Signaladern (zur Übertragung eines Massepotentials)

## Patentansprüche

1. Vorrichtung zur Bereitstellung einer eigensicheren Versorgungsspannung und zur Übertragung von Kommunikationssignalen zwischen wenigstens zwei Teilnehmern (T1, T2) eines Kommunikationsnetzwerks,
wobei der erste Teilnehmer (T1) über eine erste Betriebselektronik und der zweite Teilnehmer (T2) über eine zweite Betriebselektronik verfügen,
wobei der erste und der zweite Teilnehmer (T1, T2) über genau ein Paar von Signaladern (S) miteinander verbunden sind, und
wobei der erste Teilnehmer (T1) über ein erstes induktives Koppelelement (K1) verfügt,
welches zur galvanischen Trennung zwischen der ersten Betriebselektronik und dem Paar von Signaladern (S) dient,
und welches erste induktive Koppelelement (K1) einerseits mit dem Paar von Signaladern (S) und andererseits mit der ersten Betriebselektronik verbunden ist,
wobei das erste induktive Koppelelement (K1) weiterhin zum Übertragen von Kommunikationssignalen über das Paar von Signaladern (S) an bzw. von dem zweiten Teilnehmer (T2) dient,
wobei der zweite Teilnehmer (T2) über ein zweites induktives Koppelelement (K2) verfügt,
welches zur galvanischen Trennung zwischen der zweiten Betriebselektronik und dem Paar von Signaladern (S) dient,
und welches zweite induktive Koppelelement (K2) einerseits mit dem Paar von Signaladern (S) und andererseits mit der zweiten Betriebselektronik verbunden ist,
wobei das zweite induktive Koppelelement (K2) weiterhin zum Übertragen von Kommunikationssignalen über das Paar von Signaladern (S) an bzw. von dem ersten Teilnehmer (T1) dient,
wobei eine Spannungsquelle (U) vorgesehen ist, die zur Einspeisung einer Spannung dient, und welche Spannungsquelle (U) einerseits an einen Mittelabgriff (M1) auf der Seite des ersten Koppelelements (K1), welche mit dem Paar von Signaladern (S) verbunden ist und andererseits an ein Massepotential (GND) angeschlossen ist,
wobei ein Mittelabgriff (M2) auf der Seite des zweiten Koppelelements (K2), welche mit dem Paar von Signaladern (S) verbunden ist und ein Abgriff von dem Massepotential (GND) zur Bereitstellung einer Versorgungsspannung für die zweite Betriebselektronik dienen,
wobei die von der Spannungsquelle (U) eingespeiste Spannung und/oder die abgegriffene Versorgungsspannung derart begrenzt ist, dass sie den Anforderungen an die Eigensicherheit genügt.

2. Vorrichtung nach Anspruch 1,
**dadurch gekennzeichnet,**
**dass** das Paar von Signaladern (S) zum Übertragen der Kommunikationssignale in einem Halbduplex-Betrieb zwischen den beiden Teilnehmern (T1, T2) dient.

3. Vorrichtung nach einem der vorherigen Ansprüche,
**dadurch gekennzeichnet,**
**dass** die Übertragung des Massepotentials (GND) über eine zusätzliche elektrisch Leitung (R) zwischen dem ersten Teilnehmer (T1) und dem zweiten Teilnehmer (T2) erfolgt.

4. Vorrichtung nach einem der vorherigen Ansprüche,
**dadurch gekennzeichnet,**
**dass** sich die eingespeiste Spannung und die Kommunikationssignale in dem Paar von Signaladern (S) überlagern.

5. Vorrichtung nach einem der vorherigen Ansprüche,
**dadurch gekennzeichnet,**
**dass** es sich bei den Kommunikationssignalen um zueinander inverse elektrische Signale, die jeweils im Wesentlichen parallel zueinander über das Paar Signaladern (S) übertragen werden, handelt.

6. Vorrichtung nach einem der vorherigen Ansprüche,
**dadurch gekennzeichnet,**
**dass** die Energieversorgung des zweiten Teilnehmers (T2) ausschließlich durch die abgegriffene Versorgungsspannung erfolgt.

## Claims

1. Unit for the provision of an intrinsically safe supply voltage and for the transmission of communication signals between at least two users (T1, T2) of a communication network,
wherein the first user (T1) has a first operating electronics system and the second user (T2) has a second operating electronics system (T2),
wherein the first and second user (T1, T2) are interconnected by precisely one pair of signal wires (S), and
wherein the first user (T1) has a first inductive coupling element (K1),
which is used for galvanic isolation between the first operating electronics system and the pair of signal wires (S),
and wherein said first inductive coupling element (K1) is connected on the one hand with the pair of signal wires (S) and, on the other hand, with the first operating electronics system,
wherein the first inductive coupling element (K1) further serves to transmit communication signals via the pair of signal wires (S) to or from the second user (T2),
wherein the second user (T2) has a second inductive coupling element (K2), which is used for galvanic isolation between the second operating electronics system and the pair of signal wires (S),
and wherein said second inductive coupling element (K2) is connected on the one hand with the pair of signal wires (S) and, on the other hand, with the second operating electronics system,
wherein the second inductive coupling element (K2) further serves to transmit communication signals via the pair of signal wires (S) to or from the first user (T1), wherein a voltage source (U) is provided which is used to supply a voltage and wherein said voltage source (U) is connected on the one hand to a center tap (M1) situated on the side of the first coupling element (K1), which is connected to the pair of signal wires (S) and, on the other hand, is connected to a ground potential (GND),
wherein a center tap (M2) situated on the side of the second coupling element (K2), which is connected to the pair of signal wires (S), and a tap of the ground potential (GND) serve to provide a supply voltage for the second operating electronics system,
wherein the voltage supplied by the voltage source (U) and/or the supply voltage tapped are limited such that they meet the intrinsic safety requirements.

2. Unit as claimed in Claim 1,
**characterized in that**
the pair of signal wires (S) serves to transmit the communication signals in half-duplex operation between the two users (T1, T2).

3. Unit as claimed in one of the previous claims,
**characterized in that**
the transmission of the ground potential (GND) takes place via an additional electrical cable (R) between the first user (T1) and the second user (T2).

4. Unit as claimed in one of the previous claims,
**characterized in that**
the supplied voltage and the communication signals are superimposed in the pair of signal wires (S).

5. Unit as claimed in one of the previous claims,
**characterized in that**
the communication signals are electrical signals that are inverse to one another and that are essentially transmitted in parallel to one another via the pair of signal wires (S).

6. Unit as claimed in one of the previous claims,
**characterized in that**
energy is supplied to the second user (T2) exclusively by the tapped supply voltage.

## Revendications

1. Dispositif destiné à la mise à disposition d'une alimentation électrique à sécurité intrinsèque et destiné à la transmission de signaux de communication entre au moins deux utilisateurs (T1, T2) d'un réseau de communication,
pour lequel le premier utilisateur (T1) dispose d'une première électronique d'exploitation et le deuxième utilisateur (T2) d'une deuxième électronique d'exploitation (T2),
pour lequel le premier et le deuxième utilisateurs (T1, T2) sont reliés entre eux par l'intermédiaire d'exactement une paire de fils de signaux (S), et
pour lequel le premier utilisateur (T1) dispose d'un premier élément de couplage inductif (K1),
lequel élément sert à la séparation galvanique ente la première électronique d'exploitation et la paire de fils de signaux (S),
et lequel premier élément de couplage inductif (K1) est, d'une part, relié avec la paire de fils de signaux (S) et, d'autre part, avec la première électronique d'exploitation,
pour lequel le premier élément de couplage inductif (K1) sert en outre à la transmission de signaux de communication par l'intermédiaire de la paire de fils de signaux (S) de et vers le deuxième utilisateur (T2),
pour lequel le deuxième utilisateur (T2) dispose d'un deuxième élément de couplage inductif (K2),
lequel élément sert à la séparation galvanique ente la deuxième électronique d'exploitation et la paire de fils de signaux (S),
et lequel deuxième élément de couplage inductif (K2) est, d'une part, relié avec la paire de fils de signaux (S) et, d'autre part, avec la deuxième électronique d'exploitation,
pour lequel le deuxième élément de couplage inductif (K2) sert en outre à la transmission de signaux de communication par l'intermédiaire de la paire de fils de signaux (S) de et vers le premier utilisateur (T1),
pour lequel est prévue une source de tension (U), qui sert à l'injection d'une tension, et laquelle source de tension (U) est raccordée, d'une part, à un point milieu (M1) situé du côté du premier élément de couplage inductif (K1), lequel est relié avec la paire de fils de signaux (S) et, d'autre part, à un potentiel de masse (GND),
pour lequel un point milieu (M2) situé du côté du deuxième élément de couplage inductif (K2), lequel est relié avec la paire de fils de signaux (S), et un point du potentiel de masse (GND) servent à la mise à disposition d'une tension d'alimentation pour la deuxième électronique d'exploitation,
pour lequel la tension injectée par la source de tension (U) et/ou la tension d'alimentation prélevée sont limitées de telle sorte à satisfaire aux exigences de la sécurité intrinsèque.

2. Dispositif selon la revendication 1,
**caractérisé**
**en ce que** la paire de fils de signaux (S) sert à la transmission des signaux de communication dans un mode semi-duplex entre les deux utilisateurs (T1, T2).

3. Dispositif selon l'une des revendications précédentes,
**caractérisé**
**en ce que** la transmission du potentiel de masse (GND) s'effectue par l'intermédiaire d'un câble électrique (R) supplémentaire entre le premier utilisateur (T1) et le deuxième utilisateur (T2).

4. Dispositif selon l'une des revendications précédentes,
**caractérisé**
**en ce que** la tension injectée et les signaux de communication se superposent dans la paire de fils de signaux (S).

5. Dispositif selon l'une des revendications précédentes,
**caractérisé**
**en ce qu'**il s'agit, concernant les signaux de communication, de signaux électriques inverses les uns par rapport aux autres, qui sont chacun transmis parallèlement les uns aux autres par l'intermédiaire de la paire de fils de signaux (S).

6. Dispositif selon l'une des revendications précédentes,
**caractérisé**
**en ce que** l'alimentation électrique du deuxième utilisateur (T2) s'effectue exclusivement par la tension d'alimentation prélevée.
